# EUROPÄISCHE PATENTANMELDUNG

(11) **EP 4 559 847 A1**
(43) Veröffentlichungstag der Anmeldung: **28.05.2025**
(21) Anmeldenummer: 23211968.5
(22) Anmeldetag: 24.11.2023
(51) Int. Cl.: B65G 47/84

(54) **HÖHENVERSTELLVORRICHTUNG SOWIE TRANSPORTVORRICHTUNG**

(71) Anmelder: Tyrolon GmbH, 6395 Hochfilzen (AT)
(72) Erfinder: SCHULNIG, Ludwig, 6392 St. Jakob i.H. (AT); SCHULNIG, Elmar, 6392 St. Jakob i.H. (AT)
(74) Vertreter: Meissner Bolte Partnerschaft mbB

(57) **Zusammenfassung**

Die Erfindung betrifft eine Höhenverstellvorrichtung (10) zum Höhenverstellen einer Greif- und Transportvorrichtung (60) zum Greifen, Halten, Führen und Transportieren von insbesondere flaschenartigen Behältern, das Folgende aufweisend:
- eine Welle (12), wobei die Welle (12) zumindest abschnittsweise eine Verzahnung (16) aufweist, wobei die Verzahnung (16) axial entlang der Welle (12) angeordnet ist, und
- eine Verstelleinheit (14), umfassend:
- ein Zahnrad (18), wobei das Zahnrad (18) in die Verzahnung (16) der Welle (12) eingreifend angeordnet ist, und
- ein Verstellelement (20) zum Verstellen der Verstelleinheit (14) entlang der Welle (12), wobei das Verstellelement (20) direkt oder indirekt mit dem Zahnrad (18) gekoppelt ist, und wobei die Verstelleinheit (14) selbsthemmend ausgebildet ist, um ein selbsttätige Verstellung der Verstelleinheit (14) entlang der Welle (12) zu verhindern.

Des Weiteren betrifft die Erfindung eine Greif- und Transportvorrichtung (60).

## Beschreibung

Die vorliegende Erfindung betrifft eine Höhenverstellvorrichtung zum Höhenverstellen einer Greif- und Transportvorrichtung zum Greifen, Halten, Führen und Transportieren von insbesondere flaschenartigen Behältern sowie eine Transportvorrichtung zum Transportieren von Behältern mit mehreren Greifeinrichtungen zum Greifen, Halten und Führen von flaschenartigen Behältern.

Eine derartige Transportvorrichtung zum Greifen, Halten, Führen und/oder Transportieren von insbesondere flaschenartigen Behältern ist bereits aus dem Stand der Technik, insbesondere unter der Bezeichnung "Klammerstern", bekannt und wird bei der fließbandmäßigen Verarbeitung und Handhabung von Behältern eingesetzt. Die Transportvorrichtung weist in der Regel eine Trägerplatte als Basis auf, an der bzw. auf der einzelne Greifvorrichtungen über den Umfang verteilt angebracht sind. In einem automatischen Reinigungs-, Abfüll- oder Etikettiervorgang werden in der Regel mehrere solcher Transportvorrichtungen eingesetzt.

Unter dem Begriff "Behälter" sind im Zusammenhang mit der vorliegenden Erfindung insbesondere, aber nicht ausschließlich, Behälter mit einem im wesentlichen kreisförmigen Querschnitt zu verstehen, z.B. Flaschen oder Dosen oder Gläser, die jeweils in üblicher Weise aus Glas, Metall oder Kunststoff bestehen können. Unter dem Begriff "im Wesentlichen kreisförmig" sind im Zusammenhang mit der vorliegenden Erfindung nicht ausschließlich im geometrischen Sinne rund geformte Behälter zu verstehen, sondern beispielsweise auch ovale, regelmäßig mehreckige usw., die dann insbesondere einen im Wesentlichen kreisförmigen, aber beispielsweise auch ovalen oder mehreckigen Querschnitt aufweisen.

Eine oder mehrere Transportvorrichtungen werden u.a. in einem Prozessablauf zum Reinigen und Befüllen von Behältern verwendet, bei dem die Transportvorrichtungen örtlich so positioniert und eingestellt sind, dass sie die Behälter von Förderbändern aufnehmen und zur nächsten Station, z.B. einer Füll- oder Reinigungsanlage und von dort z.B. zu einer Etikettierstation transportieren. Zu diesem Zweck weist eine Transportvorrichtung Greifeinrichtungen zum Erfassen, Halten und/oder Führen von insbesondere flaschenartigen Behältern auf, die auf einer mit einer Antriebswelle drehbaren Trägerplatte angeordnet und befestigt sind. Eine solche Greifvorrichtung (oder Greifeinheit) für ein Behältertransportsystem weist mindestens ein Greifarmpaar mit zwei Greifarmen auf und kann zwischen einer Greifstellung und einer Öffnungsstellung wechseln. Zum Transport eines Behälters greifen die Greifarme in der Regel unter den Halsring oder bei Flaschen um den Bauch des Behälters. Dabei dient ein Steuernocken als Öffnungsmittel und eine Schraubenfeder oder ein Magnetpaar als Schließmittel der Greifeinrichtung. Der Steuernocken einer Greifeinrichtung wird über eine Schaltklaue als Betätigungsmittel angesteuert, mit deren Hilfe die Greifeinrichtung geöffnet und geschlossen werden kann.

Damit die Greifeinrichtung die zu transportierenden Behälter stabil greifen und führen kann, muss die Greifeinrichtung, insbesondere die Trägerplatte der Transportvorrichtung, auf der die Greifeinrichtung(en) montiert ist/sind, auf eine bestimmte Höhe und auf die Größe und Form der Behälter abgestimmt bzw. eingestellt werden. Dies bedeutet, dass für den Einbau der Greifeinrichtung in eine bestehende oder neue Reinigungs- und/oder Abfüllanlage für Behälter geplant und berechnet werden muss, in welcher Höhe die Greifeinrichtung angeordnet werden muss. Dazu werden die Transportvorrichtungen ggf. individuell und für den Einzelfall ausgerichtet, konstruiert und/oder gefertigt, um eine bestimmte Höhe der Greifeinrichtungen einzustellen. Dazu muss unter anderem die Länge der Antriebswelle bei der Konstruktion und Fertigung festgelegt werden. Bei der Montage der Transportvorrichtung wird daher in der Regel die Trägerplatte mit den Greifeinrichtungen auf einer bestimmten Höhe der Antriebswelle der Transportvorrichtung starr befestigt. Gleiches gilt in Bezug auf eine bestimmte Höhe für eine Antriebseinrichtung, die über Antriebselemente die Greifeinrichtungen, insbesondere deren Öffnungsmittel, betätigen und damit öffnen und schließen kann.

Es ist daher die Aufgabe der vorliegenden Erfindung, eine Höhenverstellvorrichtung für eine Transportvorrichtung der eingangs genannten Art insbesondere dahingehend zu konzipieren, dass die Transportvorrichtung einfach und effizient in der Höhe verstellt werden kann. Ferner ist es eine Aufgabe der vorliegenden Erfindung eine Transportvorrichtung zur Verfügung zu stellen, deren Höhe abhängig von den mit der Transportvorrichtung mitwirkenden Anlagen eines Behältertransportsystems und von der Form und Größe der Behälter schnell und einfach angepasst werden kann.

Diese Aufgabe wird erfindungsgemäß durch eine Höhenverstellvorrichtung mit den Merkmalen des Anspruchs 1 sowie mit einer Transportvorrichtung mit den Merkmalen des Anspruchs 14 gelöst.

Danach ist in einem ersten Aspekt der Erfindung eine Höhenverstellvorrichtung zum Höhenverstellen einer Greif- und Transportvorrichtung zum Greifen, Halten, Führen und Transportieren von insbesondere flaschenartigen Behältern vorgesehen. Die Höhenverstellvorrichtung weist dabei eine Welle auf, wobei die Welle zumindest abschnittsweise eine Verzahnung aufweist, wobei die Verzahnung axial entlang der Welle angeordnet ist. Zusätzlich weist die Höhenverstellvorrichtung eine Verstelleinheit auf. Dabei umfasst die Verstelleinheit ein Zahnrad, wobei das Zahnrad in die Verzahnung der Welle eingreifend angeordnet ist, und ein Verstellelement zum Verstellen der Verstelleinheit entlang der Welle aufweist. Dabei ist das Verstellelement direkt oder indirekt mit dem Zahnrad gekoppelt, und die Verstelleinheit ist selbsthemmend ausgebildet, um eine selbsttätige Verstellung der Verstelleinheit entlang der Welle zu verhindern.

Die erfindungsgemäße Höhenverstellvorrichtung bietet zunächst den Vorteil, dass ein einzelnes Einstellen der Greifeinrichtungen ersetzt wird. Dadurch wird der Bedarf an technischem Personal zum Anpassen der Greifeinrichtungen für neue Behälter oder für eine neue Prozessumgebung reduziert. Des Weiteren muss die Stellplatte der Transportvorrichtung nicht mehr von den Greifeinrichtungen oder weiteren Elementen befreit werden, um dessen Gewicht, Unhandlichkeit oder Sperrigkeit zu verringern und dadurch dem Personal das Einstellen der Stellplatte zu erleichtern.

Des Weiteren muss die Transportvorrichtung, zumindest hinsichtlich ihrer Höhe, nicht mehr einzeln und für jeden Kundenwunsch geplant und angefertigt werden. Die einheitliche Verwendung von Antriebswellen bestimmter Länge vereinfacht ebenfalls die Produktion der Transportvorrichtungen und reduziert somit die Kosten. Des Weiteren sind mittels der Höhenverstellvorrichtung die Transportvorrichtungen universell in Betrieben anpassbar und einsetzbar, selbst an bestehende Anlagen.

Ein weiterer Vorteil ergibt sich dadurch, dass die Höhenverstellvorrichtung die Stellplatte der Transportvorrichtung jederzeit (bis auf beim Greifen und Führen von Behältern) auf eine bestimmte Höhe verschieben kann. Dadurch werden Vorbereitungen zur Anpassung der Transporteinrichtung auf unterschiedliche Behältergrößen und -formen sowie unterschiedliche Zu-/Abförderanlagen (z.B. Fließbänder, weitere Transporteinrichtungen) zeitlich reduziert und vereinfacht.

Unter einer selbsthemmenden Ausbildung der Verstelleinheit ist zu verstehen, dass nach einer Verstellung der Verstelleinheit entlang der Welle zunächst eine vorgegebene Höhe eingestellt wird, bei deren Erreichen die Gewichtskraft der Verstelleinheit als eine Art Störung wirkt, wobei die Selbsthemmung selbsttätig gegen die Störung arbeitet, um diese auszugleichen oder zu korrigieren. Die Selbsthemmung der Verstelleinheit bzw. die bei einer Störung auftretende Selbsthemmkraft beträgt mindestens 100%, vorzugsweise mindestens 105%, weiter vorzugsweise mindestens 110%, der Gewichtskraft der Verstelleinheit.

Dies bedeutet, dass die Verstelleinheit über eine eingebaute Rückkopplung oder Regelung verfügt, die bewirkt, dass die Verstelleinheit in ihrer Höhe stabil bleibt, auch wenn äußere Einflüsse versuchen, sie aus dem Gleichgewicht zu bringen.

Die Welle mit abschnittsweiser Verzahnung kann eine Welle mit integrierter Zahnstange sein. Die Zahnstange und die Welle können auch monolithisch sein. Eine Welle mit Verzahnung, auch Zahnradwelle oder Zahnradschnecke genannt, ist eine zylindrische Welle, die speziell für die Übertragung von Drehmoment und Bewegung zwischen zwei oder mehreren Zahnrädern oder Zahnradschnecken ausgelegt ist. Die Verzahnung besteht aus gezahnten oder gerillten Vertiefungen in der Welle, die in die entsprechenden Vertiefungen der Zahnräder oder Zahnradschnecken eingreifen. Diese Verzahnung ermöglicht eine effiziente Übertragung von Drehbewegungen und Kräften zwischen den Komponenten.

Die Verzahnung auf einer solchen Welle kann verschiedene Formen und Profile haben, je nach den Anforderungen der Anwendung. Die gebräuchlichsten Verzahnungsarten sind z. B. die Geradverzahnung, die Schrägverzahnung und die Schneckenverzahnung. Jede Verzahnungsart hat ihre eigenen Eigenschaften und Anwendungen, die sich auf die Art der Kraftübertragung, die Geschwindigkeit und das Drehmoment auswirken können. Die Verzahnung des Zahnrades der Verstelleinheit entspricht vorteilhafterweise der Verzahnung der Welle, wodurch der Widerstand bei der Höhenverstellung und der Verschleiß durch die Höhenverstellung verringert werden.

Besonders vorteilhaft für die Höhenverstellung ist es, wenn die Welle und damit die Verzahnung vertikal oder im Wesentlichen vertikal angeordnet sind. Unter "im Wesentlichen vertikal" ist zu verstehen, dass die Anordnung der Welle um maximal 5°, vorzugsweise um maximal 10°, von einer vertikalen Achse abweichen kann.

In einer vorteilhaften Ausgestaltung weist die Verstelleinheit mindestens ein elastisches Hemmelement und/oder eine Überholkupplung auf, um selbsthemmend zu wirken.

Vorliegend wird als elastisches Hemmelement eine mechanische Komponente verstanden, die dazu verwendet wird, die Bewegung oder das Verschieben der Verstelleinheit zu verlangsamen oder zu stoppen, indem es eine elastische Verformung oder Nachgiebigkeit ausnutzt. Die Funktionsweise eines elastischen Hemmelements beruht auf seiner Fähigkeit, Energie aufzunehmen und zu speichern, wenn es gedehnt oder komprimiert wird, und diese Energie dann allmählich freizugeben, wenn die äußeren Kräfte nachlassen oder sich ändern. Typischerweise besteht ein elastisches Hemmelement aus Materialien wie Gummi, Federn oder anderen elastischen Werkstoffen.

Das elastische Hemmelement kann somit als Reibelement wirken. Beispielsweise kann das mindestens eine (elastische) Hemmelement als Metallfeder ausgebildet sein und kraftschlüssig mit einer relativ dazu beweglichen Gegenkontur der Verstelleinheit bzw. des Verstellelements zusammenwirken.

Eine Überholkupplung ist eine mechanische Einrichtung oder ein Kupplungstyp, der eine Bewegung oder Drehung des Zahnrads der Verstelleinheit in einer Richtung ermöglicht, während er die Bewegung in der entgegengesetzten Richtung sperrt oder verhindert. Die Überholkupplung ermöglicht eine Überholbewegung in einer Richtung, während sie in der anderen Richtung gesperrt oder blockiert ist. Diese Art von Kupplung wird in verschiedenen mechanischen Systemen verwendet, um bestimmte Funktionen oder Sicherheitsmechanismen zu realisieren. Dabei kann die Überholkupplung als Rutschkupplung, Rollenrücklaufsperre, Spragkupplung oder Kammscheibenkupplung ausgeführt sein.

Eine Rutschkupplung besteht aus zwei konzentrischen Kupplungsscheiben, von denen eine auf der Welle befestigt ist und die andere frei auf der Welle sitzt. Zwischen den Scheiben befindet sich ein Reibbelag. In einer Richtung (in der Regel die Fahrtrichtung) kann die Scheibe auf der Welle gleiten, so dass ein Überholen möglich ist. In der anderen Richtung wird die Kupplung durch den Reibbelag blockiert, um ein Zurückrollen zu verhindern.

Eine Rollenrücklaufsperre arbeitet mit Rollen oder Kugeln, die sich auf geneigten Flächen bewegen. Wenn sich die Welle in eine Richtung dreht, drücken die Rollen oder Kugeln gegen die geneigte Fläche und lassen die Bewegung zu. In der entgegengesetzten Richtung blockieren sie die Bewegung.

Eine Spragkupplung arbeitet mit Sperrklinken, die in einer Richtung frei auf der Welle gleiten und in der Gegenrichtung blockieren. Dreht sich die Welle in die richtige Richtung, gleiten die Sperrklinken über die Welle und lassen die Bewegung zu. In der Gegenrichtung verhaken sie sich und blockieren die Bewegung. Die Kammscheibenkupplung ist eine Kupplung mit zahnartigen Kammscheiben, die sich je nach Drehrichtung der Welle öffnen oder schließen, um den Überholvorgang zu ermöglichen oder zu sperren.

Der Einsatz eines elastischen Hemmelements und/oder einer Überholkupplung ist besonders vorteilhaft, wenn das Verstellelement direkt mit dem Zahnrad gekoppelt ist, das heißt, wenn bei der Betätigung des Verstellelements, diese direkt auf das Zahnrad übertragen wird.

Weiterhin kann es von Vorteil sein, wenn die Verstelleinheit ein selbsthemmendes Schneckengetriebe mit einer in das Zahnrad eingreifenden Schneckenwelle aufweist.

Bei Verwendung eines Schneckengetriebes ist es besonders vorteilhaft, wenn das Verstellelement indirekt mit dem Getriebe gekoppelt ist. Indirekt bedeutet, dass das Verstellelement z.B. direkt mit der Schneckenwelle gekoppelt ist. Durch die Betätigung des Verstellelements wird die Schneckenwelle verstellt, die in das Zahnrad eingreift und dieses dadurch verstellt.

Ein Schneckengetriebe, auch Schneckentrieb oder Schneckenradgetriebe genannt, ist ein mechanisches Getriebe, das zur Übertragung einer Drehbewegung zwischen zwei sich nicht überschneidenden, im Allgemeinen rechtwinklig zueinander stehenden Wellen. Es besteht aus einer Schnecke, der Schneckenwelle, und einem Schneckenrad, dem Zahnrad.

Die Schneckenwelle, die auf einer der Wellen, vorzugsweise der Welle mit dem Verstellelement, montiert ist, hat ein schraubenförmiges Profil, das in gewisser Weise einem Gewinde ähnelt. Das Schneckenrad, das auf der Schneckenwelle montiert ist, hat Zähne, die in die Windungen der Schnecke eingreifen. Wenn die Schnecke gedreht wird, überträgt sie die Drehbewegung auf das Schneckenrad, wodurch eine Bewegung entlang der Schneckenwelle erzeugt wird.

Ein wesentlicher Vorteil des Schneckengetriebes ist seine Fähigkeit, eine hohe Übersetzung oder mechanische Verstärkung zu bieten.

Ein weiterer Vorteil von Schneckengetrieben ist ihre Effizienz beim Verhindern des sogenannten Zurückdrehens oder Zurückrollens. Das bedeutet, dass die Last auf dem Schneckenrad nur schwer in der Lage ist, die rotatorische Bewegung auf die Schnecke zurückzugeben, was sie selbsthemmend macht.

Es ist von Vorteil, wenn das Zahnrad der Verstelleinheit, insbesondere der Verstelleinheit mit einem Schneckengetriebe, ein Kegelrad ist.

Ein wesentlicher Vorteil des Kegelrads in einem Schneckengetriebe ist seine Fähigkeit, ein hohes Drehmoment zu übertragen und zu erzeugen. Dies ist besonders bei Anwendungen von Vorteil, bei denen ein hohes Untersetzungsverhältnis erforderlich ist, um eine niedrigere Abtriebsdrehzahl bei gleichzeitig höherem Drehmoment zu erreichen. Schneckengetriebe allein haben oft Schwierigkeiten, diese hohen Drehmomentanforderungen zu erfüllen, aber in Kombination mit Kegelrädern können diese Anforderungen erfüllt werden.

Ein weiterer wichtiger Vorteil ist, dass Kegelräder eine präzise und effiziente Kraftübertragung ermöglichen. Dies führt zu geringen Reibungsverlusten und ermöglicht einen hohen Wirkungsgrad in Schneckengetrieben. Die Zähne der Kegelräder greifen nahtlos ineinander und sorgen so für eine reibungslose und geräuscharme Übertragung der Drehbewegung.

Außerdem bieten Kegelräder eine höhere Präzision und Genauigkeit bei der Ausrichtung der Wellen im Schneckengetriebe. Die Kegelräder gewährleisten eine stabile und zuverlässige Kraftübertragung.

Ein weiterer Vorteil von Kegelrädern in Schneckengetrieben ist ihre Fähigkeit, hohe axiale Belastungen aufzunehmen. Dies ist besonders bei der Höhenverstellung wichtig, da das Getriebe nicht nur Drehmomente, sondern auch Kräfte in axialer Richtung übertragen muss, um Bewegungen zu stabilisieren oder zu steuern.

In einer weiteren vorteilhaften Ausgestaltung weist die Verstelleinheit eine Feststelleinheit zum Arretieren der Verstelleinheit in einer Arretierstellung entlang der Welle auf.

Die Feststelleinheit bzw. Freigabeeinheit kann dabei zum passiven Umschalten von der Arretierstellung in die Freigabestellung ausgebildet sein. Die Feststelleinheit kann dabei als eine Art Klemme ausgebildet sein, um die Feststelleinheit der Verstelleinheit in der Arretierstellung zu fixieren, zu blockieren und zu sichern. Wird der Klemmmechanismus, also die Feststelleinheit aktiviert, kommt es zu einem direkten Kontakt zwischen einem beweglichen Teil, also der Verstelleinheit, und einer stationären Oberfläche entlang der Welle, wobei Reibung entsteht, welche verhindert, dass eine weitere Bewegung der Verstelleinheit verhindert wird. Es ist denkbar, dass hierfür ein Reibelement an der Verstelleinheit vorgesehen ist, welches an die Welle gedrückt wird.

Die Arretierstellung ist eine vorbestimmte Höhe in der die Verstelleinheit verriegelt bzw. fixiert ist, um die Verstelleinheit und die mit ihr in Verbindung stehenden weiteren Bauteile einer Transportvorrichtung in dieser Position zu halten. Dies erhöht die Sicherheit und Stabilität der Höhenverstellvorrichtung, vor allem einer Höhenverstellvorrichtung einer Transportvorrichtung.

Des Weiteren ist es bei der Höhenverstellvorrichtung vorteilhaft, wenn das Verstellelement der Verstelleinheit und/oder die Feststelleinheit der Verstelleinheit mittels einem Verstellantrieb betätigbar ist, wobei der Verstellantrieb elektronisch oder pneumatisch und/oder hydraulisch betreibbar ist.

Dabei weisen das Verstellelement bzw. die Feststelleinheit jeweils einen eigenen Verstellantrieb auf. Zur Steuerung des jeweiligen Verstellantriebs kann eine Steuereinheit vorgesehen sein, um eine präzise Verstellung durchführen zu können.

Dabei kann es möglich sein, dass der Verstellantrieb einen Akkumulator aufweist. Bei einem akkubetriebenen Verstellantrieb liegt der entscheidende Pluspunkt in der Unabhängigkeit von externen Stromquellen, was eine höhere Flexibilität und Mobilität ermöglicht. Im Vergleich zu kabelgebundenen Aktuatoren eliminiert der Akkubetrieb lästige Kabel und ermöglicht eine einfachere Installation und Nutzung. Ein weiterer signifikanter Vorteil besteht in der Möglichkeit, den den Verstellantrieb oder Aktuator in Bereichen ohne direkten Zugang zu einer Stromquelle einzusetzen. Dies eröffnet neue Anwendungsfelder, insbesondere in Situationen, in denen eine ständige Stromversorgung nicht gewährleistet ist. Ein entscheidender Vorteil eines elektronischen Verstellantriebs ist seine präzise Steuerbarkeit, die eine feine und genaue Steuerung/Regelung von Positionen, Geschwindigkeiten oder Kräften ermöglicht. Die Flexibilität eines elektronischen Stellantriebs ist ein weiterer Vorteil. Die Einstellungen und Betriebsparameter können einfach über eine Steuereinheit angepasst werden, was eine schnelle Anpassung an unterschiedliche Anforderungen oder Arbeitsbedingungen ermöglicht. Elektronische Verstellantriebe bieten auch eine höhere Effizienz und Energieeinsparungen, da sie die Möglichkeit bieten, den Energieverbrauch entsprechend den aktuellen Anforderungen zu optimieren. Dies ist besonders bei Anwendungen von Bedeutung, bei denen die Bewegungen nicht ständig aktiv sein müssen, wie es bei der Höhenverstellvorrichtung der Fall ist.

Der Vorteil pneumatischer Verstellantriebe ist die schnelle Reaktionszeit. Dies ermöglicht es ihnen, Bewegungen und Anpassungen in Echtzeit durchzuführen. Die Fähigkeit, in Sekundenbruchteilen auf Befehle zu reagieren, macht sie ideal für Aufgaben, bei denen Präzision und Timing wichtig sind. Ein weiterer großer Vorteil ist die einfache Steuerung von pneumatischen Verstellantrieben. Druckluft, die als Energiequelle dienen kann, kann leicht reguliert werden, um die gewünschten Positionen oder Bewegungen zu erreichen. Dies ermöglicht eine präzise und zuverlässige Steuerung, die in vielen Anwendungen erforderlich ist, um Genauigkeit und Wiederholbarkeit sicherzustellen. Darüber hinaus sind pneumatische Systeme in der Regel kostengünstig zu implementieren und zu warten. Die Robustheit und Langlebigkeit von pneumatischen Verstellantrieben sind ebenfalls vorteilhaft. Sie sind oft in der Lage, in rauen Umgebungen eingesetzt zu werden, da sie weniger anfällig für Verschmutzung, Feuchtigkeit und extreme Temperaturen sind als andere Antriebsarten. Dies macht sie zuverlässig und wartungsarm. Bei Bedarf können Verschleißteile wie Dichtungen oder Ventile leicht ausgetauscht werden, um die Lebensdauer des Antriebs zu verlängern, ohne dass komplexe Reparaturen erforderlich sind.

Ein Vorteil hydraulischer Verstellantriebe ist die präzise und stabile Positionierung. Mit der Fähigkeit, präzise und stufenlose Bewegungen auszuführen, eignen sie sich gut für Anwendungen, bei denen eine genaue Kontrolle über Positionen oder Bewegungen erforderlich ist, wie beispielsweise der Höhenverstellung einer Greif- und Transporteinheit für Behälter. Hydraulische Verstellantriebe zeichnen sich auch durch ihre Robustheit und Langlebigkeit aus. Sie sind in der Regel widerstandsfähig gegenüber extremen Umgebungsbedingungen, Verschmutzung und Feuchtigkeit, was sie zuverlässig und wartungsarm macht. Die Geschwindigkeitsregelung ist ein weiterer Vorteil hydraulischer Verstellantriebe. Sie können sowohl hohe Geschwindigkeiten als auch langsame, präzise Bewegungen erreichen, was ihre Anpassungsfähigkeit an verschiedene Anwendungen erhöht.

Dabei kann der Verstellantrieb der Höhenverstellvorrichtung ausgebildet sein, jedes Greifarmpaar einer Transporteinrichtung einzeln anzuheben und abzusenken. Hierzu bedarf es für jedes Greifarmpaar einer eigenen Hubachse oder Spindel, die durch einen oder mehrere Stellantriebe bereitgestellt werden. Daraus ergibt sich der Vorteil, dass Behälter verschiedener Größe und Form gleichzeitig transportiert werden können. Hierzu wird vorab der zu greifende Behälter gescannt, dessen Form und Größe festgestellt und anschließend das oder die greifenden Greifarmpaare in seiner/ihren Position(en)/Höhe(en) verstellt bzw. angepasst.

In einer weiteren Ausgestaltung ist es vorteilhaft, wenn das Verstellelement der Verstelleinheit und/oder die Feststelleinheit der Verstelleinheit manuell betätigbar ist.

Eine manuelle Betätigung der Feststelleinheit und/oder der Feststelleinheit erlaubt eine sofortige Reaktion auf Veränderungen oder Notfälle. In Situationen, in denen schnelles Handeln erforderlich ist, kann die manuelle Betätigung sofortige Sicherheit oder Stabilität gewährleisten. Demnach trägt das manuelle Verstellen zur Erhöhung der Sicherheit bei und kann als ein zusätzliches Verstellelement und/oder Feststelleinheit vorgesehen sein.

Manuell betätigbare Feststelleinheiten und/oder Verstelleinheiten sehen keine elektrischen Komponenten vor, so dass diese unabhängig von Strom und komplexen Steuerungsvorgängen sind und im Vergleich zu Antrieben reduzierte Kosten aufweisen. Aufgrund der Robustheit sind sie zuverlässiger.

In einer weiteren vorteilhaften Ausgestaltung, weist die Verstelleinheit ein Gehäuse mit einer Aufnahme auf, wobei das Zahnrad in der Aufnahme angeordnet ist, und wobei das Verstellelement durch eine Öffnung des Gehäuses nach außen durchragend angeordnet ist.

Ein wesentlicher Vorteil des Gehäuses für das Zahnrad und das Verstellelement ist seine Schutzfunktion. Das Gehäuse umschließt das Zahnrad und zumindest teilweise das Verstellelement und schützt die sich in der Aufnahme angeordenten Elemente vor äußeren Einflüssen wie Staub, Schmutz, Feuchtigkeit und Fremdkörpern. Dies trägt dazu bei, die Lebensdauer der Höhenverstellvorrichtung zu verlängern und den Wartungsaufwand zu verringern, da es weniger anfällig für Verschleiß und Korrosion ist.

Darüber hinaus bietet das Gehäuse eine wichtige Sicherheitsfunktion. Es verhindert den direkten Kontakt mit den sich bewegenden Teilen und minimiert so die Verletzungsgefahr.

Ein weiterer Vorteil des Gehäuses ist, dass es die Schmierung des Zahnrads bzw. des Getriebes erleichtert. Es kann als Reservoir für Schmiermittel dienen und so eine gleichmäßige und effektive Schmierung gewährleisten. Dies trägt zur Verringerung von Reibung und Verschleiß bei, was den Wirkungsgrad des Getriebes erhöht und seine Lebensdauer verlängert.

Darüber hinaus ermöglicht das Gehäuse eine präzise Ausrichtung und Positionierung des Zahnrads und des Verstellelements innerhalb des Systems. Dies ist entscheidend, um sicherzustellen, dass zumindest die Verzahnungen des Zahnrads und der Welle richtig ineinandergreifen und eine effiziente Kraftübertragung gewährleisten. Eine korrekte Gehäusekonstruktion gewährleistet die korrekte Ausrichtung der Verzahnungen und minimiert das Risiko von Ausrichtungsfehlern.

Bei der Höhenverstellvorrichtung ist es besonders vorteilhaft, wenn das elastische Hemmelement und/oder die Überholkupplung in der Aufnahme des Gehäuses zumindest abschnittsweise um das Verstellelement herum angeordnet ist.

Dadurch kann der zur Verfügung stehende Bauraum des Gehäuses optimal genutzt werden, um die Selbsthemmung einfach und platzsparend zur Verfügung zu stellen. Die erforderliche Reibfläche für das elastische Hemmelement kann sowohl am Verstellelement als auch an der Seitenfläche der Gehäuseaufnahme vorgesehen werden.

Besonders vorteilhaft ist es dabei, wenn das elastische Hemmelement eine Feder, insbesondere eine Blattfeder, ist.

Ein bedeutender Vorteil der Verwendung einer Feder als Hemmelement in einem Gehäuse liegt in ihrer Fähigkeit zur Energiespeicherung und Freigabe. Die Feder kann Energie aufnehmen, wenn sie gespannt wird, und sie dann kontrolliert freigeben, wenn sie entlastet wird. Dies ermöglicht eine präzise und kontrollierte Bewegungsbegrenzung oder Verzögerung, was in verschiedenen Anwendungen entscheidend ist.

Die Feder bietet eine kostengünstige Lösung für das Hemmen von Bewegungen in einem Gehäuse. Im Vergleich zu komplexeren Hemmelementen, wie Bremsen oder Kupplungen, sind Federn oft einfacher und preiswerter in der Herstellung und Wartung. Die Verwendung einer Feder als Hemmelement ist oft geräuschlos, da sie keine Reibung erzeugt, wie es bei einigen anderen Hemmelementen der Fall sein kann. Dies ist besonders vorteilhaft bei Anwendungen, die einen geräuscharmen Betrieb erfordern. Die Feder bietet eine hohe Zuverlässigkeit und eine lange Lebensdauer. Gut gewartete Federn können über einen langen Zeitraum hinweg zuverlässig funktionieren und erfordern nur selten Wartung oder Austausch. Ein weiterer Vorteil ist die einfache Steuerung der Hemmwirkung durch die Spannen oder Entspannen der Feder. Dies ermöglicht eine Anpassung an unterschiedliche Anforderungen und Anwendungen.

In einer weiteren vorteilhaften Ausgestaltung ist die Schneckenwelle in der Aufnahme so angeordnet ist, dass die Schneckenwelle in das Zahnrad eingreift und mit dem Verstellelement verbunden ist.

Darüber hinaus ermöglicht das Gehäuse eine präzise Ausrichtung und Positionierung des Zahnrads, insbesondere des Kegelrads, und der Schneckenwelle des Schneckengetriebes und des Verstellelements innerhalb der Aufnahme des Gehäuses der Höhenverstellvorrichtung. Dies ist entscheidend, um sicherzustellen, dass zumindest die Verzahnungen des Zahnrads und der Welle sowie der Verzahnung des Zahnrads und der Schneckenwelle richtig ineinandergreifen und eine effiziente Kraftübertragung gewährleisten. Eine korrekte Gehäusekonstruktion gewährleistet die korrekte Ausrichtung der Verzahnungen und minimiert das Risiko von Ausrichtungsfehlern.

In einer weiteren Ausgestaltung, weist das Gehäuse an einer ersten Seite einen ersten Befestigungsabschnitt, insbesondere einen ersten Flansch, zum Befestigen einer Trägerplatte einer Greif- und Transportvorrichtung auf.

Der erste Befestigungsabschnitt ermöglicht eine einfache Positionierung der Höhenverstellvorrichtung in Bezug auf weitere Bauteile, wie die Trägerplatte einer Greif- und Transportvorrichtung, sowie eine einfache und schnelle Befestigung an den besagten Bauteilen.

In einer weiteren vorteilhaften Ausgestaltung, weist das Gehäuse an einer der ersten Seite gegenüberliegenden zweiten Seite einen zweiten Befestigungsabschnitt zum Befestigen einer Schaltung einer Greif- und Transportvorrichtung auf.

Auch der zweite Befestigungsabschnitt kann dabei als ein zweiter Flansch ausgestaltet sein.

Besonders vorteilhaft an der Ausgestaltung des ersten und zweiten Befestigungsabschnitts als Flansch, ist die sichere und stabile Verbindung zwischen zu verbindenden Bauteile. Aufgrund der geometrischen Form des Flanschs können die im Betrieb wirkenden Kräfte gleichmäßig verteilen werden. Gleichzeitig wird durch die Zugänglichkeit der Teile sowohl die Montage als auch die Demontage vereinfacht.

Dabei ist die Aufnahme mit dem Zahnrad und dem Verstellelement zwischen dem ersten Befestigungsabschnitt der ersten Seite und dem zweiten Befestigungsabschnitt der zweiten Seite des Gehäuses angeordnet.

Ein zweiter Aspekt der Erfindung ist eine Transportvorrichtung zum Transportieren von Behältern, umfassend mehrere Greifeinrichtungen zum Greifen, Halten und Führen von flaschenartigen Behältern, wobei die Greifeinrichtungen Betätigungselemente der Greifarme aufweisen, sowie eine Trägerplatte zum Aufnehmen der Greifeinrichtungen, eine Antriebswelle zum Drehen der Trägerplatte und eine Höhenverstellvorrichtung wie vorstehend beschrieben.

Dabei ist es denkbar, dass mehrere Transportvorrichtungen mit jeweils einer Trägerplatte bzw. Stern, insbesondere einen Einlaufstern, mindestens einen Transferstern, und einen Auslaufstern, vorgesehen sind, wobei jede Transportvorrichtung jeweils eine Höhenverstellvorrichtung aufweist. Demnach können auch mehrere Verstellantriebe und/oder Steuerungen vorgesehen sein. Dabei ist es besonders vorteilhaft, wenn die Verstellantriebe in Abhängigkeit zueinander zum Verstellen der Höhe verwendet werden. Dabei können sie mittels einer Steuereinheit, insbesondere einer Funksteuereinheit, verstellt, insbesondere synchronisiert zueinander verstellt, werden.

Dies ermöglicht ein einfaches Verstellen der Höhe der Trägerplatte mittels der Höhenverstellvorrichtung. Diese ermöglicht ein präzises und einfaches Anpassen der Höhe an die zu transportierenden Behälter.

Weitere Einzelheiten und Vorteile der Erfindung sollen nun anhand einiger in den Zeichnungen dargestellter und bevorzugter Ausführungsbeispiele näher erläutert werden. Es zeigen:
- Figur 1: eine perspektivische Ansicht ersten Ausführungsform einer erfindungsgemäßen Höhenverstellvorrichtung;
- Figur 2: eine Schnittansicht einer ersten Ausführungsform einer erfindungsgemäßen Höhenverstellvorrichtung;
- Figur 3: eine Schnittansicht einer ersten Ausführungsform einer erfindungsgemäßen Verstelleinheit;
- Figur 4: eine perspektivische Ansicht einer zweiten Ausführungsform einer erfindungsgemäßen Höhenverstellvorrichtung;
- Figur 5: eine Schnittansicht einer zweiten Ausführungsform einer erfindungsgemäßen Verstelleinheit;
- Figur 6: eine perspektivische Ansicht einer erfindungsgemäßen Transportvorrichtung.

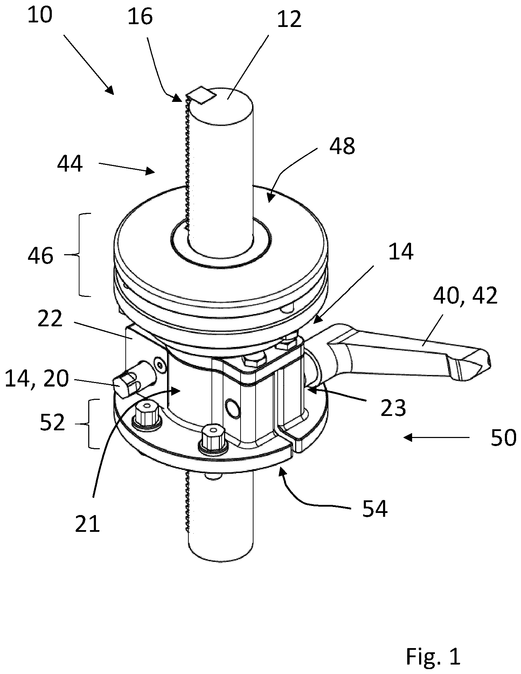

In den Fig. 1 bis 3 und Fig. 4 bis 5 sind jeweils eine Höhenverstellvorrichtung 10 zum Höhenverstellen einer Greif- und Transporteinrichtung zum Greifen, Halten, Führen und Transportieren von insbesondere flaschenartigen Behältern einer ersten Ausführungsform und einer zweiten Ausführungsform dargestellt. Beiden Ausführungsformen ist gemeinsam, dass sie jeweils eine Welle 12 und eine Verstelleinheit 14 aufweisen.

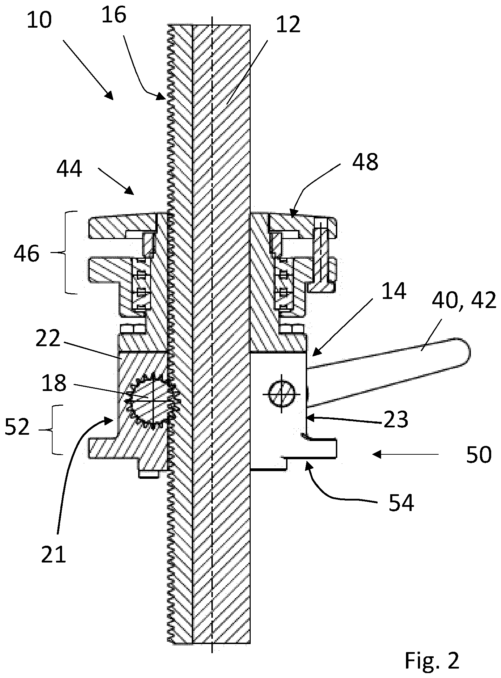

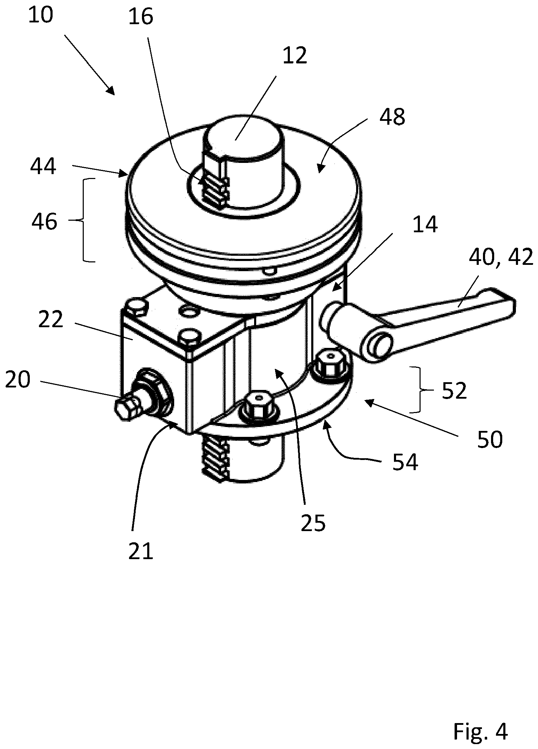

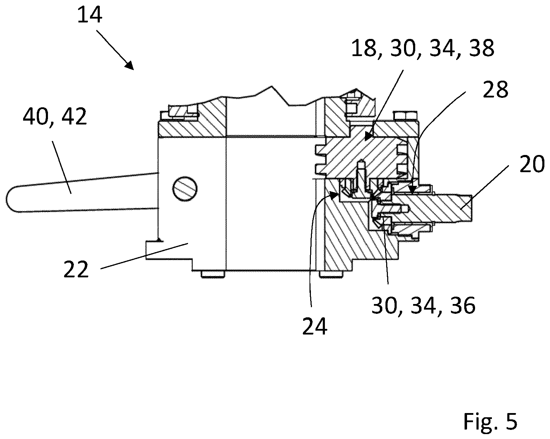

Die Welle 12 weist sowohl in der ersten Ausführungsform gemäß den Fig.1 bis 3 als auch in der zweiten Ausführungsform gemäß den Fig. 4 bis 5 zumindest abschnittsweise eine Verzahnung 16 auf. Die Verzahnung 16 ist nach Art einer Zahnstange ausgestaltet und ist axial entlang der Welle 12 angeordnet, siehe Fig. 2 oder Fig. 5.

Die Verstelleinheit 14 umfasst ein Zahnrad 18 und ein Verstellelement 20. Das Zahnrad 18 ist in die Verzahnung 16 der Welle 12 eingreifend angeordnet. Das Verstellelement 20 dient zum Verstellen der Verstelleinheit 14 entlang der Welle 12 und ist in beiden Ausführungsformen selbsthemmend ausgebildet, so dass ein selbsttätiges Verstellen der Verstelleinheit 14 entlang der Welle 12 verhindert wird. Das heißt, es wird ein Durchrutschen der Verstelleinheit 14 entlang der Welle 12 verhindert.

Um zum einen das Zahnrad 18 bzw. die Verbindung zwischen Zahnrad 18 und Verzahnung 16 der Welle 12 vor äußeren Einflüssen zu schützen, weisen die Verstelleinheiten 14 jeweils ein Gehäuse 22 mit einer Aufnahme 24 auf. Dabei ist das jeweilige Zahnrad 18 und ein Abschnitt 26 des jeweiligen Verstellelements 20 in der Aufnahme 24 angeordnet. Ferner weisen die Gehäuse 22 jeweils eine Öffnung 28 auf, welche die Aufnahme 24 mit der Umgebung verbindet. Dabei ragt das jeweilige Verstellelement 20 durch die Öffnung 28 des jeweiligen Gehäuses 22 nach außen, um einfach verstellt werden zu können.

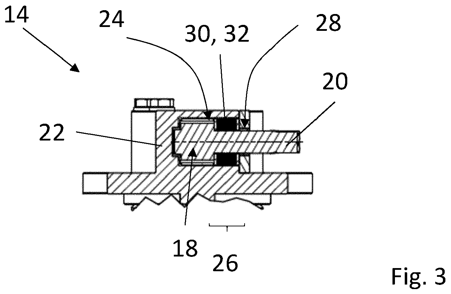

In der ersten Ausführungsform ist das Verstellelement 20 direkt mit dem Zahnrad 18 gekoppelt, dies ist in Fig. 3 dargestellt. Dabei wird die Verstellung der Höhe direkt auf das Zahnrad 18 übertragen, welches dann je nach Verstellrichtung axial entlang der Verzahnung 16 der Welle 12 verstellt bzw. bewegt wird.

Um bei dieser Verstellung die Selbsthemmung 30 zu erzeugen, ist ein elastisches Hemmelement 32 vorgesehen. Das elastische Hemmelement 32 ist zusätzlich zu dem Zahnrad 18 in der Aufnahme 24 angeordnet und ist zumindest abschnittsweise in radialer Richtung um das Verstellelement 20 herum angeordnet. Im vorliegenden Ausführungsbeispiel der Fig. 1 bis 3 ist das elastische Hemmelement 32 vollständig radial um das Verstellelement 20 herum angeordnet. Dieses elastische Hemmelement 32 verlangsamt oder stoppt die Bewegung der Verstelleinheit 14 oder das Verschieben der Verstelleinheit, indem es eine elastische Verformung oder Nachgiebigkeit ausnutzt. Dabei wird das elastische Hemmelement 32 entweder gedehnt oder komprimiert und kann dabei die Bewegungsenergie aufnehmen und speichern. Sobald die äußeren Kräfte nachlassen, wird die Energie langsam wieder freigegeben. In der vorliegenden Ausführung ist das elastische Hemmelement 32 eine metallische Blattfeder. Allerdings kann äquivalent zu der metallischen Feder auch ein anderes elastisches Hemmelement 32, beispielsweise ein Hemmelement 32 aus Gummi oder einem anderen elastischen Werkstoff, oder eine Überholkupplung vorgesehen sein.

In der zweiten Ausführungsform der Höhenverstellvorrichtung 10 gemäß den Fig.4 bis 5 ist das Verstellelement 20 indirekt mit dem Zahnrad 18 gekoppelt. Hier ist ein Schneckengetriebe 34 vorgesehen, demnach ist das Verstellelement 20 direkt mit der Schneckenwelle 36 gekoppelt. Durch die Betätigung des Verstellelements 20 wird die Schneckenwelle 36 verstellt. Da die Schneckenwelle 36 in das Zahnrad 18 eingreifend angeordnet ist, wird die Verstellung des Verstellelements 20 von der Schneckenwelle 36 auf das Zahnrad 18 übertragen, wodurch dann die Verstelleinheit 14 entlang der Welle 12 bewegt wird. Als Zahnrad 18 ist, wie in Fig. 5 dargestellt, ein Kegelrad 38 vorgesehen.

Die Selbsthemmung 30 der Verstelleinheit 14 wird vorliegend über das Schneckengetriebe 34 bewerkstelligt. Aufgrund des schraubenförmigen Profils der Schneckenwelle 36, wird eine Übertragung einer Verstellkraft von der Schneckenwelle 36 auf das Zahnrad 18 ermöglicht, aber ein Zurückgeben der rotatorischen Bewegung von dem Zahnrad 18 auf die Schneckenwelle 36 verhindert.

Wie in den Fig. 3 bis 5 zu erkennen ist, ist sowohl das Zahnrad 18 als auch die Schneckenwelle 36 in der Aufnahme 24 des Gehäuses 22 angeordnet. Dabei ist die Schneckenwelle 36 mit dem zumindest abschnittsweise aus der Öffnung 28 des Gehäuses 22 hinausragenden Verstellelement 20 verbunden und greift in das Zahnrad 18 ein, um die Verstellkraft von dem Verstellelement 20 auf das Zahnrad 18 zu übertragen.

Ist die vorgegebene Höhe erreicht, kann die Verstelleinheit 14 mittels einer Feststelleinheit 40 in einer Arretierstellung entlang der Welle 12 arretiert werden. In beiden Ausführungsformen ist die Feststelleinheit 40 als Hebel 42 ausgestaltet, so dass die Feststelleinheit 40 vorliegend manuell betätigbar ist. Die Feststelleinheit 40 wirkt hier als Klemme, demnach wird nach Umlegen des Hebels 42 ein zusätzlich vorgesehenes Reibelement gegen die Welle 12 gedrückt, um die Arretierposition zu halten. Das Reibelement wird dabei gegen den Bereich der Welle 12 gedrückt der keine Verzahnung 16 aufweist. Je nach Ausführungsform ist die Feststelleeinheit auf einer dem Verstellelement 20 gegenüberliegenden zweiten Gehäuseseite 23 angeordnet sein, wie in Fig.1 dargestellt, oder auf einer der zur ersten Gehäuseseite 21 mit dem Verstellelement 20 orthogonalen dritten Gehäuseseite 25, beispielsweise Fig. 3. In weiteren hier nicht gezeigten Ausführungsformen kann die Feststelleinheit 40 einen Verstellantrieb aufweisen. Dieser Verstellantrieb kann dabei elektronisch oder pneumatisch oder hydraulisch betreibbar sein.

Des Weiteren sind auch die Verstelleinheiten 14 beider Ausführungsformen so ausgelegt, dass jeweils ein Verstellantrieb zum Verstellen der Verstelleinheit 14 vorgesehen sein kann. Der Verstellantrieb kann elektronisch oder pneumatisch oder hydraulisch betreibbar sein.

Um die Höhenverstellvorrichtung 10 einfach Handhaben und Befestigen zu können, ist an einer ersten Seite 44 des Gehäuses 22 ein erster Befestigungsabschnitt 46 vorgesehen. Mittels des ersten Befestigungsabschnitts 46 wird die Höhenverstellung an einer Trägerplatte 68 einer Greif- und Transportvorrichtung 62 befestigt. In beiden Ausführungsformen ist der erste Befestigungsabschnitt 46 als ein erster Flansch 48 ausgestaltet, wie in den Fig. 1 und 3 zu erkennen ist.

Für eine Befestigung einer Schaltung der Greif- und Transportvorrichtung 60 weist das Gehäuse 22 an einer der ersten Seite 44 gegenüberliegenden zweiten Seite 50 einen zweiten Befestigungsabschnitt 52 auf. Dabei ist zur Vereinfachung der Handhabung auch der zweite Befestigungsabschnitt 52 als zweiter Flansch 54 ausgestaltet, siehe Fig. 1 und 3.

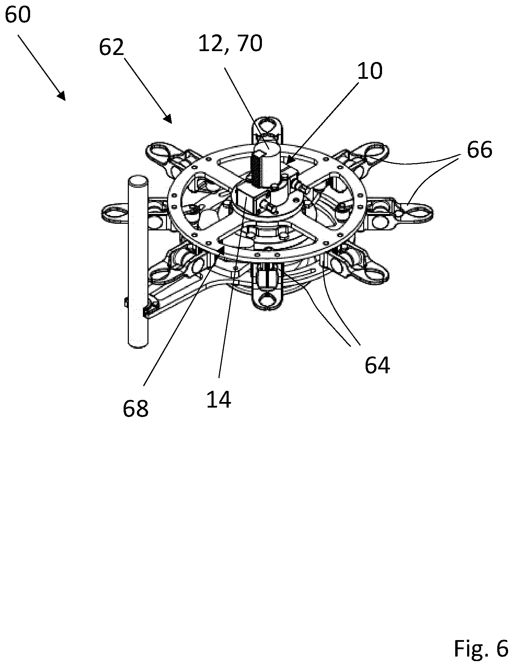

In Fig. 6 ist eine Transportvorrichtung 60 zum Transportieren von Behältern dargestellt. Die Transportvorrichtung 60 umfasst mehrere Greifeinrichtungen 62 zum Greifen, Halten und Führen von flaschenartigen Behältern, wobei die Greifeinrichtungen 62 Betätigungselemente 64 der Greifarme 66 aufweisen, eine Trägerplatte 68 zum Aufnehmen der Greifeinrichtungen 62, eine Antriebswelle 70 zum Drehen der Trägerplatte 68 sowie eine Höhenverstellvorrichtung 10 der ersten Ausführungsform gemäß den Fig. 1 bis 3 oder der zweiten Ausführungsform gemäß den Fig. 4 bis 6.

### Bezugszeichenliste

- 10: Höhenverstellvorrichtung
- 12: Welle
- 14: Verstelleinheit
- 16: Verzahnung
- 18: Zahnrad
- 20: Verstellelement
- 21: erste Gehäuseseite
- 22: Gehäuse
- 23: zweite Gehäuseseite
- 24: Aufnahme
- 25: dritte Gehäuseseite
- 26: Abschnitt
- 28: Öffnung
- 30: Selbsthemmung
- 32: Hemmelement
- 34: Schneckengetriebe
- 36: Schneckenwelle
- 38: Kegelrad
- 40: Feststelleinheit
- 42: Hebel
- 44: erste Seite
- 46: Erster Befestigungsabschnitt
- 48: Erster Flansch
- 50: Zweite Seite
- 52: Zweiter Befestigungsasbschnitt
- 54: Zweiter Flansch

- 60: Transportvorrichtung
- 62: Greifeinrichtung
- 64: Betätigungselemente
- 66: Greifarme
- 68: Trägerplatte
- 70: Antriebswelle

## Patentansprüche

1. Höhenverstellvorrichtung (10) zum Höhenverstellen einer Greif- und Transportvorrichtung (60) zum Greifen, Halten, Führen und Transportieren von insbesondere flaschenartigen Behältern, das Folgende aufweisend:
- eine Welle (12), wobei die Welle (12) zumindest abschnittsweise eine Verzahnung (16) aufweist, wobei die Verzahnung (16) axial entlang der Welle (12) angeordnet ist, und
- eine Verstelleinheit (14), umfassend:
- ein Zahnrad (18), wobei das Zahnrad (18) in die Verzahnung (16) der Welle (12) eingreifend angeordnet ist, und
- ein Verstellelement (20) zum Verstellen der Verstelleinheit (14) entlang der Welle (12),
wobei das Verstellelement (20) direkt oder indirekt mit dem Zahnrad (18) gekoppelt ist, und
wobei die Verstelleinheit (14) selbsthemmend ausgebildet ist, um ein selbsttätige Verstellung der Verstelleinheit (14) entlang der Welle (12) zu verhindern.

2. Höhenverstellvorrichtung (10) nach Anspruch 1,
**dadurch gekennzeichnet, dass**
die Verstelleinheit (14) mindestens ein elastisches Hemmelement (32) und/oder eine Überholkupplung aufweist, um selbsthemmend zu wirken.

3. Höhenverstellvorrichtung (10) nach Anspruch 1,
**dadurch gekennzeichnet, dass**
die Verstelleinheit (14) ein selbsthemmendes Schneckengetriebe (34) mit einer in das Zahnrad (18) eingreifenden Schneckenwelle (36) aufweist.

4. Höhenverstellvorrichtung (10) nach Anspruch 3,
**dadurch gekennzeichnet, dass**
das Zahnrad (18) der Verstelleinheit (14), insbesondere der Verstelleinheit (14) mit einem selbsthemmenden Schneckengetriebe (34), ein Kegelrad (38) ist.

5. Höhenverstellvorrichtung (10) nach einem der vorhergehenden Ansprüche,
**dadurch gekennzeichnet, dass**
wobei die Verstelleinheit (14) eine Feststelleinheit (40) zum Arretieren der Verstelleinheit (14) in einer Arretierstellung entlang der Welle (12) aufweist.

6. Höhenverstellvorrichtung (10) nach einem der vorhergehenden Ansprüche,
**dadurch gekennzeichnet, dass**
das Verstellelement (20) der Verstelleinheit (14) und/oder die Feststelleinheit (40) der Verstelleinheit (14) mittels einem Verstellantrieb betätigbar ist, wobei der Verstellantrieb elektronisch oder pneumatisch oder hydraulisch betreibbar ist.

7. Höhenverstellvorrichtung (10) nach einem der vorhergehenden Ansprüche,
**dadurch gekennzeichnet, dass**
das Verstellelement (20) der Verstelleinheit (14) und/oder die Feststelleinheit (40) der Verstelleinheit (14) manuell betätigbar ist.

8. Höhenverstellvorrichtung (10) nach einem der vorhergehenden Ansprüche,
**dadurch gekennzeichnet, dass**
die Verstelleinheit (14) ein Gehäuse (22) mit einer Aufnahme (24) aufweist, wobei das Zahnrad (18) in der Aufnahme (24) angeordnet ist, und wobei das Verstellelement (20) durch eine Öffnung (28) des Gehäuses (22) nach außen durchragend angeordnet ist.

9. Höhenverstellvorrichtung (10) nach Anspruch 8,
**dadurch gekennzeichnet, dass**
das elastische Hemmelement (32) und/oder die Überholkupplung in der Aufnahme (24) des Gehäuse (22)s zumindest abschnittsweise um das Verstellelement (20) herum angeordnet ist.

10. Höhenverstellvorrichtung (10) nach Anspruch 9,
**dadurch gekennzeichnet, dass**
das elastische Hemmelement (32) eine Feder, insbesondere eine Blattfeder, ist.

11. Höhenverstellvorrichtung (10) nach Anspruch 8,
**dadurch gekennzeichnet, dass**
die Schneckenwelle (36) in der Aufnahme (24) so angeordnet ist, dass die Schneckenwelle (36) in das Zahnrad (18) eingreift und mit dem Verstellelement (20) verbunden ist.

12. Höhenverstellvorrichtung (10) nach einem der vorhergehenden Ansprüche,
**dadurch gekennzeichnet, dass**
das Gehäuse (22)
an einer ersten Seite (44) einen ersten Befestigungsabschnitt (46), insbesondere einen ersten Flansch (48), zum Befestigen einer Trägerplatte (68) einer Greif- und Transportvorrichtung (60) aufweist.

13. Höhenverstellvorrichtung (10) nach einem der vorhergehenden Ansprüche,
**dadurch gekennzeichnet, dass**
das Gehäuse (22) an einer der ersten Seite (44) gegenüberliegenden zweiten Seite (50) einen zweiten Befestigungsabschnitt (52) zum Befestigen einer Schaltung einer Greif- und Transportvorrichtung (60) aufweist.

14. Transportvorrichtung (60) zum Transportieren von Behältern, umfassend
- mehrere Greifeinrichtungen (62) zum Greifen, Halten und Führen von flaschenartigen Behältern, wobei die Greifeinrichtungen (62) Betätigungselemente (64) der Greifarme (66) aufweisen,
- eine Trägerplatte (68) zum Aufnehmen der Greifeinrichtungen (62),
- eine Antriebswelle (70) zum Drehen der Trägerplatte (68) und
- eine Höhenverstellvorrichtung (10) nach einem der vorhergehenden Ansprüche.
